# EUROPÄISCHE PATENTANMELDUNG

(11) **EP 4 290 117 A1**
(43) Veröffentlichungstag der Anmeldung: **13.12.2023**
(21) Anmeldenummer: 23157685.1
(22) Anmeldetag: 21.02.2023
(51) Int. Cl.: F16P 3/14

(54) **ÜBERWACHUNGSEINRICHTUNG**

(30) Priorität: 08.06.2022 DE 202022103234 U
(71) Anmelder: Leuze electronic GmbH + Co. KG, 73277 Owen/Teck (DE)
(72) Erfinder: Brunner, Rolf, 82223 Eichenau (DE); Rohbeck, Volker, 85244 Röhrmoos (DE); Storr, Mathias, 72622 Nürtingen (DE)
(74) Vertreter: Ruckh, Rainer Gerhard

(57) **Zusammenfassung**

Die Erfindung betrifft eine Überwachungseinrichtung (1) mit einem Sicherheitssensor (2), mittels dessen ein dreidimensionaler Raumbereich (7) überwacht wird. Innerhalb des Raumbereichs (7) ist ein definierter Teilbereich (8) vorhanden. Im Raumbereich (7) vorhandene Objekte sind mittels des Sicherheitssensors (2) klassifizierbar. Nur als zulässig klassifizierte Objekte erhalten Zugang zum Teilbereich (8).

## Beschreibung

Die Erfindung betrifft eine Überwachungseinrichtung.

Derartige Überwachungseinrichtungen können zur Sicherung von Gefahrenbereichen an Anlagen vorgesehen sein, in welchem von der Anlage gefahrbringende Bewegungen ausgeführt werden.

Insbesondere kann ein Zugang zu einer Anlage abgesichert werden. Der Zugang zur Anlage kann durch ein Förderband oder dergleichen realisiert sein, über welches Transportgüter der Anlage zugeführt werden.

Die Überwachungseinrichtung weist wenigstens einen Sicherheitssensor auf. Mit dem Sicherheitssensor kann der Zugang zur Anlage überwacht werden. Dabei wird mit dem Sicherheitssensor ein Schutzfeld überwacht, das sich über den gesamten Zugangsbereich erstreckt. Der Sicherheitssensor kann insbesondere in Form eines Lichtvorhangs ausgebildet sein.

Wird mit dem Sicherheitssensor ein Objekt, insbesondere eine Person, im Schutzfeld erkannt, wird eine Sicherheitsfunktion ausgelöst, die die Anlage in einen sicheren Zustand versetzt, so dass von dieser keine Gefahren mehr ausgehen können. Insbesondere wird die Anlage stillgesetzt.

Zur Durchführung von Arbeitsvorgängen mittels der Anlage müssen dieser Transportgüter zugeführt werden. Bei Passieren des Zugangs würde eine durch den Sicherheitssensor ausgelöste Sicherheitsfunktion bei Detektion des Transportguts im Schutzfeld zu einem unnötigen Stillstand der Anlage führen.

Daher sind bei bekannten Überwachungseinrichtungen Mutingsensoren vorgesehen, die dem Sicherheitssensor in Transportrichtung des Transportguts vorgeordnet sind. Typischerweise sind die Mutingsensoren von Lichtschrankenanordnungen gebildet. Anhand charakteristischer Folgen von Strahlunterbrechungen von Lichtschranken dieser Lichtschrankenanordnungen können Transportgüter von Personen oder anderen sicherheitskritischen Objekten unterschieden werden.

Wird mit den Mutingsensoren das Transportgut erkannt, wird der Sicherheitssensor überbrückt, das heißt gemutet, so dass während eines Mutingbetriebs ein Eindringen eines Objekts in das Schutzfeld des Sicherheitssensors nicht zur Auslösung der Sicherheitsfunktion führt. Damit kann das Transportgut den Sicherheitssensor passieren, ohne dass die Sicherheitsfunktion ausgelöst und die Anlage stillgesetzt wird.

Nachdem das Transportgut den Sicherheitssensor passiert hat, wird der Mutingbetrieb beendet und der Sicherheitssensor übernimmt wieder eine Überwachungsfunktion.

Dabei ist nachteilig, dass mit den Mutingsensoren das Transportgut nur unvollständig erfasst werden kann, was zu einer fehlerhaften Aktivierung des Mutingbetriebs führen kann.

Weiterhin ist nachteilig, dass neben dem Sicherheitssensor mit den Mutingsensoren zusätzliche Sensoren eingesetzt werden müssen, was einen unerwünscht hohen Konstruktions- und Kostenaufwand bedingt.

Schließlich ist nachteilig, dass die Steuerung des Sicherheitssensors zusammen mit den Mutingsensoren komplex und aufwändig ist. Der Sicherheitssensor muss für ein bestimmtes Zeitintervall deaktiviert werden, damit das Transportgut das vom Sicherheitssensor überwachte Schutzfeld passieren kann, ohne dass die Sicherheitsfunktion ausgelöst und die Anlage stillgesetzt wird.

Das Zeitintervall muss an die Bewegung des Transportguts angepasst sein, wobei Probleme auftreten können, wenn die Bewegung des Transportguts von einem vorgegebenen Bewegungsmuster abweicht, insbesondere wenn das Transportgut im Bereich des Schutzfelds angehalten wird.

Wenn der Sicherheitssensor deaktiviert ist, muss durch andere Maßnahmen gesichert sein, dass kein sicherheitskritisches Objekt, insbesondere eine Person, Zugang zur Anlage erhält, was einen weiteren Nachteil darstellt.

Der Erfindung liegt die Aufgabe zugrunde eine Überwachungseinrichtung bereitzustellen welche bei geringem konstruktivem Aufwand eine hohe Funktionalität aufweist.

Zur Lösung sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem Sicherheitssensor, mittels dessen ein dreidimensionaler Raumbereich überwacht wird. Innerhalb des Raumbereichs ist ein definierter Teilbereich vorhanden. Im Raumbereich vorhandene Objekte sind mittels des Sicherheitssensors klassifizierbar, wobei nur als zulässig klassifizierte Objekte Zugang zum Teilbereich erhalten.

Die erfindungsgemäße Überwachungseinrichtung mit dem Sicherheitssensor bildet ein fehlersicheres System im Sinne der Maschinenrichtlinie und erfüllt insbesondere die normativen Anforderungen hinsichtlich der Norm EN/ISO 13849-1 bzw. der Norm EN/IEC 62061 für den Einsatz in sicherheitstechnischen Applikationen, insbesondere zur Gewährleistung der funktionalen Sicherheit von sicherheitsbezogenen elektrischen Steuerungssystemen und deren Untersystemen.

Ein wesentlicher Vorteil der Erfindung besteht darin, dass die Überwachungseinrichtung als Sensorik nur einen Sicherheitssensor aufweist, wodurch ein besonders einfacher, kompakter Aufbau der Überwachungseinrichtung gegeben ist.

Wesentlich hierbei ist, dass mit dem Sicherheitssensor ein dreidimensionaler Raumbereich überwacht werden kann, wobei innerhalb des gesamten Raumbereichs mit dem Sicherheitssensor Objekte detektiert und zudem klassifiziert werden können. Dabei erfolgt eine Objektklassifikation derart, dass eine Objektklasse von zulässigen Objekten gebildet ist, wobei eine weitere Objektklasse von nicht zulässigen Objekten gebildet ist.

Innerhalb des vom Sicherheitssensor erfassten Raumbereichs wird mit dem Sicherheitssensor ein definierter Teilbereich überwacht. Dieser kann applikationsspezifisch von einem Benutzer vorgegeben sein. Insbesondere kann der Teilbereich während einer Installationsphase der Überwachungseinrichtung konfiguriert werden, beispielsweise mit einer Programmiereinheit.

Der Teilbereich ist ein sicherheitsrelevanter Bereich. Beispielsweise kann der Teilbereich ein Gefahrenbereich an einer Maschine oder Anlage sein.

Bei den zulässigen Objekten handelt es um Objekte wie Transportfahrzeuge oder Transportgüter, die zu keinen Gefahrensituationen führen, wenn diese im Teilbereich vorhanden sind. Nicht zulässige Objekte wie z.B. Personen können dagegen zu Gefahrensituationen führen, wenn sie sich im Teilbereich befinden.

Der Grundgedanke der Erfindung besteht darin, mit dem Sicherheitssensor eine Überwachung derart durchzuführen, dass nur zulässige Objekte Zugang zum Teilbereich erhalten. Demgegenüber generiert der Sicherheitssensor dann, wenn ein nicht zulässiges Objekt im Teilbereich detektiert wird, ein entsprechendes Ausgangssignal, das einen sicherheitskritischen Zustand anzeigt und/oder das zur Auslösung einer Sicherheitsfunktion führt, die einen sicheren Zustand herbeiführt. Befindet sich beispielsweise im Teilbereich eine Anlage, von der Gefahren ausgehen können, besteht die Sicherheitsfunktion darin, die Anlage stillzusetzen.

Ein wesentlicher Vorteil der Erfindung besteht somit darin, dass mit nur einem Sicherheitssensor zulässige Objekte von nicht zulässigen Objekten unterschieden werden können und gleichzeitig eine Sicherheitsüberwachung derart durchgeführt werden kann, dass das Eindringen nicht zulässiger Objekte in den Teilbereich überwacht wird.

Im Gegensatz zu Überwachungseinrichtungen, die mit Mutingsensoren arbeiten, muss der Sicherheitssensor nicht gemutet, d.h. vorübergehend deaktiviert werden, damit zulässige Objekte in den Teilbereich gelangen können. Vielmehr bleibt der Sicherheitssensor dauernd aktiv, insbesondere auch zur Durchführung der Sicherheitsüberwachung. Dadurch wird die Sicherheit der erfindungsgemäßen Überwachungseinrichtung signifikant erhöht. Ein weiterer Vorteil besteht darin, dass zulässige Objekte mit Transportfahrzeugen oder Transportgut dauernd, d.h. ohne zeitliche Beschränkung in den Teilbereich hineingeführt werden können, was die Verfügbarkeit der jeweils überwachten Anlage erhöht. Schließlich weist die erfindungsgemäße Überwachungseinrichtung auch eine hohe Manipulationssicherheit auf, da mit dem Sicherheitssensor auch mehrere Objekte im Raumbereich, insbesondere im Teilbereich, gleichzeitig erfasst und klassifiziert werden können. Möchte sich beispielsweise eine Person unbefugt Zugang zum Teilbereich verschaffen, indem sie dicht neben einem Transportfahrzeug geht, so wird mit dem Sicherheitssensor das Transportfahrzeug als zulässiges Objekt und die Person als nicht zulässiges Objekt erkannt, was zur Generierung des Ausgangssignals führt, wenn die Person in den Teilbereich eindringt.

Vorteilhaft ist der Sicherheitssensor ein optischer Sensor, ein Radarsensor oder ein Ultraschallsensor.

Dabei bildet der Sicherheitssensor einen Distanzsensor wobei insbesondere die Distanzmessungen nach einem Impuls-Laufzeit-Verfahren oder nach einem Phasenmessverfahren durchführbar sind.

Damit können Objekte ortsaufgelöst im Raumbereich erfasst werden, d.h. es können Geometrien von Objekten und deren Positionen im Raumbereich bestimmt werden.

Besonders vorteilhaft ist der Sicherheitssensor ein optischer Sensor in Form eines kamerabasierten Sensors oder eines LIDAR-Sensors.

Der Sicherheitssensor weist Sensorkomponenten zur Objekterfassung sowie eine Steuer- und Auswerteeinheit von Sensorsignalen, die mit den Sensorkomponenten generiert werden, auf.

Zur Erfüllung der sicherheitstechnischen Anforderungen weist die Steuer- und Auswerteeinheit einen redundanten und damit fehlersicheren Aufbau auf.

In der Steuer- und Auswerteeinheit erfolgt auch die Objektklassifizierung von erfassten Objekten. Vorteilhaft weist die Steuer- und Auswerteeinheit hierzu ein neuronales Netz auf. Mit dem neuronalen Netz wird ein selbstlernendes System bereitgestellt. Die Koeffizienten des neuronalen Netzes werden zunächst in einem Einlernvorgang anhand bekannter Objekte bestimmt. Während des Betriebs des neuronalen Netzes werden die Koeffizienten durch selbsttätiges Lernen anhand von aktuellen Objektdetektionen nachgeführt.

In der Steuer- und Auswerteeinheit ist auch eine Speichereinheit vorhanden, in der der konfigurierbare Teilbereich abgespeichert ist.

In der Steuer- und Auswerteeinheit wird abhängig von der durchgeführten Objektklassifikation eine Ausgabegröße generiert, die ein erfasstes Objekt einer Objektklasse zuordnet, wobei insbesondere das Objekt als zulässiges Objekt bzw. als nicht zulässiges Objekt klassifiziert wird.

Bei Erfassung eines nicht zulässigen Objekts wird in der Steuer- und Auswerteeinheit das Ausgangssignal generiert, wobei das Ausgangssignal an einem Ausgang des Sicherheitssensors oder mittels eines Bussystems an eine externe Einheit ausgegeben wird.

Die externe Einheit kann ein Signalgeber sein, der abhängig vom Ausgangssignal eine Alarmmeldung generiert.

Weiterhin kann die externe Einheit eine Sicherheitssteuerung sein, die eine gefahrbringende Maschine oder Anlage, die im Teilbereich angeordnet ist, steuert. Mit dem Ausgangssignal wird dann eine Sicherheitsfunktion derart ausgelöst, dass über die Sicherheitssteuerung die Maschine oder Anlage in einen gefahrlosen Zustand überführt wird, insbesondere stillgesetzt wird.

Vorteilhaft ist der Ausgang ein sicherer Ausgang und das Bussystem ein sicheres Bussystem.

Damit weist der Sicherheitssensor eine fehlersichere Ausgangsstruktur auf, mittels derer eine fehlersichere Ausgabe des Ausgangssignals gewährleistet ist.

Vorteilhaft werden in der Steuer- und Auswerteeinheit Objekte dadurch erfasst, dass aus einer Gesamtheit von Messwerten des Sicherheitssensors zu Objekten gehörende Messwerte extrahiert werden.

Die Messwerte liegen als Punktwolke von Distanz- bzw. Positionswerten vor. Die Extraktion der von einem Objekt stammenden Messwerte erfolgt mittels Bildverarbeitungsalgorithmen.

Gemäß einer vorteilhaften Ausführungsform sind zur Durchführung einer Objektklassifikation mit dem Sicherheitssensor erfasste Objekte durch zusammenhängende zwei- oder dreidimensionale Körper modelliert.

Die zweidimensionalen Körper können ebene Flächen sein. Die dreidimensionalen Körper können von Kugeln, Kuben, Zylindern und dergleichen gebildet sein. Die Körper weisen damit generell einfache Geometrien auf und ermöglichen so eine einfache Modellierung von Objekten, die nur wenig Rechenzeit beansprucht Anhand dieser Modellierung kann eine zuverlässige Objektklassifikation durchgeführt werden.

Besonders vorteilhaft wird zur Durchführung einer Objektklassifikation das Bewegungsprofil der Körper analysiert.

Dabei ist eine Person als nicht zulässiges Objekt dadurch klassifiziert, dass deren Körper ein ungleichförmiges Bewegungsprofil erzeugen.

Weiterhin ist ein Objekt in Form eines Transportfahrzeugs oder Transportguts als zulässiges Objekt dadurch klassifiziert, dass deren Körper ein gleichförmiges Bewegungsprofil erzeugen.

Damit können auf einfache Weise nicht zulässige Objekte in Form von Personen sicher von zulässigen Objekten wie Transportfahrzeugen oder Transportgut unterschieden werden.

Gemäß einer weiteren vorteilhaften Ausführungsform ist die Zuordnung zu einer Objektklasse eines mit dem Sicherheitssensor erfassten Objekts abhängig davon, ob eine zwei- oder dreidimensionale Sollstruktur in die Kontur des Objekts einpassbar ist oder nicht.

So gilt beispielsweise ein Transportfahrzeug als zulässiges Objekt, wenn es bei dem erfassten Objekt von einem beliebigen Objektpunkt eine zweidimensionale Projektion auf das dreidimensionale Objekt gibt, welche über eine Sollstruktur in Form eines Rechtecks vorgegebene Größe, beispielsweise 2m x 2m, hervorsteht.

Weiterhin kann ein erfasstes Objekt als Transportfahrzeug erkannt und als zulässiges Objekt klassifiziert werden, falls in der erfassten dreidimensionalen Objektstruktur ein Quader mit einer vorgegebenen, einen Schwellwert übersteigenden Größe nicht eingepasst werden kann. Auch kann für die Erfassung einer Person als nicht zulässiges Objekt gefordert werden, dass die erfasste dreidimensionale Objektstruktur in einen Würfel vorgegebener Kantenlänge eingepasst werden kann. Ist dies nicht der Fall, wird das Objekt z.B. als Transportfahrzeug klassifiziert.

Auch diese Variante ermöglicht eine schnelle und zuverlässige Objektklassifizierung.

Gemäß einer zweiten Variante wird für ein mit dem Sicherheitssensor erfasstes Objekt eine Umhüllende von deren Objektkontur gebildet. Eine Zuordnung des Objekts zu einer Objektklasse erfolgt durch Vergleich der Umhüllenden mit Referenz Geometrien.

Anhand der Geometrie der Umhüllenden können insbesondere Personen sicher von zulässigen Objekten wie Transportfahrzeugen oder Transportgütern unterschieden werden.

Schließlich ist es möglich, dass eine Objektklassifikation durch Auswertung der Farbe, Geschwindigkeit, Größe und/oder Bewegungsrichtung eines Objekts erfolgt.

Beispielsweise kann ein Transportfahrzeug durch eine fest vorgegebene Bewegungsrichtung identifizierbar sein. Auch kann ein Transportfahrzeug dadurch erkannt werden, dass es eine Fläche mit einer Mindestgröße aufweist, die den gleichen Farbton besitzt.

Die Erfindung wird im Folgenden anhand der Zeichnungen erläutert. Es zeigen:
- Figur 1:: Ausführungsbeispiel der erfindungsgemäßen Überwachungseinrichtung in einer Seitenansicht.
- Figur 2:: Überwachungseinrichtung gemäß Figur 1 in einer Draufsicht von oben.

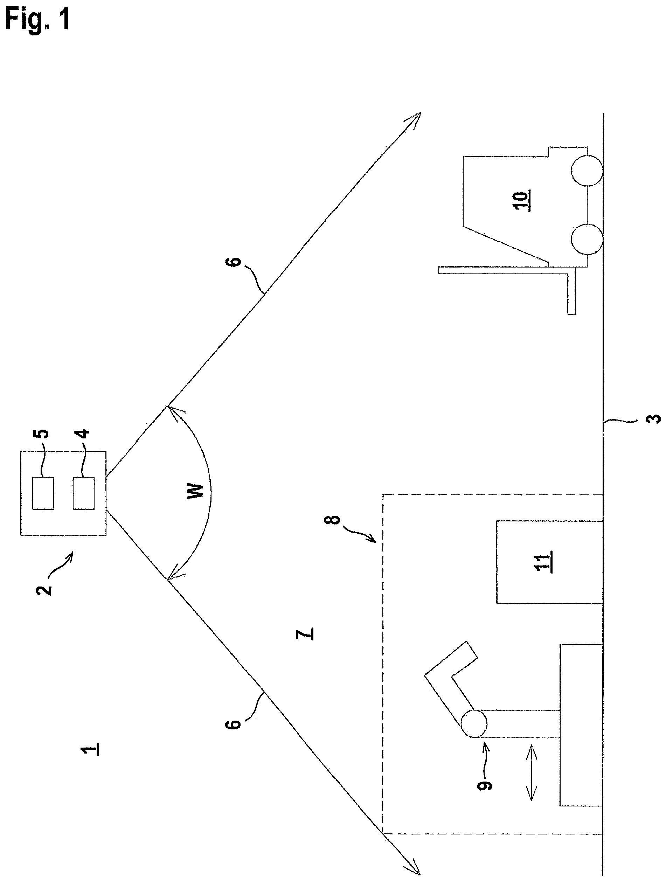

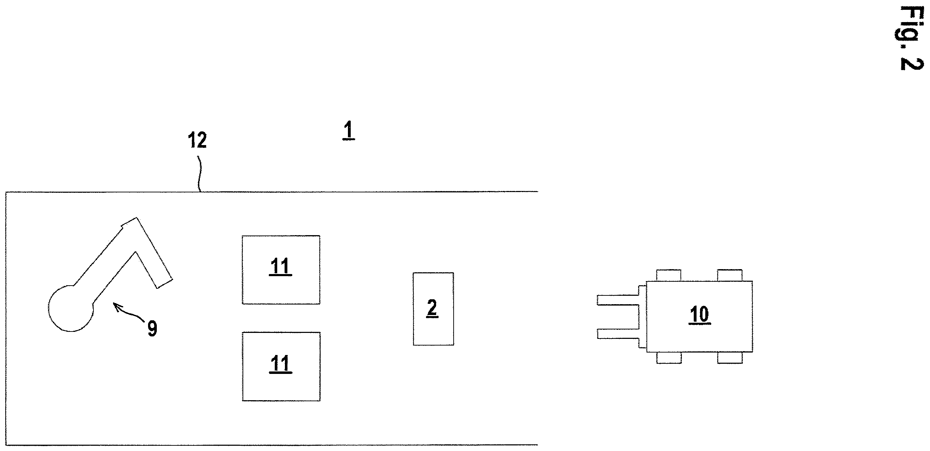

Die Figuren 1 und 2 zeigen ein Ausführungsbeispiel der erfindungsgemäßen Überwachungseinrichtung 1. Die Überwachungseinrichtung 1 umfasst einen Sicherheitssensor 2, der an einer nicht dargestellten Halterung in Abstand oberhalb eines Bodens 3 einer Fabrikhalle oder dergleichen montiert ist.

Der Sicherheitssensor 2 kann prinzipiell als Radarsensor oder Ultraschallsensor ausgebildet sein. Im vorliegenden Fall ist der Sicherheitssensor 2 ein optischer Sensor, der in Form eines distanzmessenden, kamerabasierten Sensors oder eines scannenden LIDAR-Sensors ausgebildet ist. Bei dem optischen Sensor erfolgen die Distanzmessungen nach einem Impuls-Laufzeit-Verfahren oder nach einem Phasenmessverfahren.

Der Sicherheitssensor 2 weist, wie in Figur 1 dargestellt, Sensorkomponenten 4 und eine Steuer- und Auswerteeinheit 5 auf. Für den Fall, dass der Sicherheitssensor 2 ein kamerabasierter Sensor ist, sind als Sensorkomponenten 4 eine Lichtstrahlen 6 emittierende Beleuchtungseinheit und eine Empfängereinheit in Form eines Bildsensors vorgesehen, wobei der Bildsensor von einem CCD- oder CMOS-Array mit einer matrixförmigen Anordnung von Empfangselementen gebildet sein kann.

Die Beleuchtungseinheit strahlt Lichtstrahlen 6 in einen Winkelbereich W ab, wodurch ein dreidimensionaler Raumbereich 7 überwacht wird.

Für den Fall, dass der Sicherheitssensor 2 ein LIDAR-Sensor ist, sind als Sensorkomponenten 4 ein Lichtstrahlen 6 emittierender Sender und ein Lichtstrahlen 6 empfangender Empfänger vorgesehen, die einen Distanzsensor bilden. Als weitere Sensorkomponente 4 ist eine Ablenkeinheit vorgesehen, mittels derer die Lichtstrahlen 6 periodisch innerhalb des Winkelbereichs W geführt sind, wodurch ein dreidimensionaler Raumbereich 7 überwacht wird.

Die Steuer- und Auswerteinheit dient zur Auswertung von Sensorsignalen der Sensorkomponenten 4 des Sicherheitssensors 2. Zur Erfüllung der sicherheitstechnischen Anforderungen im Sinne der Maschinenrichtlinie weist die Steuer- und Auswerteeinheit 5 einen redundanten Aufbau auf, mit dem eine fehlersichere Auswertung der Sensorsignale gewährleistet ist. Die Steuer- und Auswerteeinheit 5 kann insbesondere aus zwei sich zyklisch gegenseitig überwachenden Rechnereinheiten bestehen.

Mit dem Sicherheitssensor 2 werden Objekte im Raumbereich 7 erfasst. Aus den hierbei generierten Sensorsignalen, d.h. Messwerten, werden zunächst mit Methoden der Bildverarbeitung die Messwerte extrahiert, die zu Objekten gehören. Die Objekte werden mit Lichtstrahlen 6 in unterschiedlichen Winkelpositionen erfasst. Durch die dabei ermittelten Distanzwerte zusammen mit den aktuellen Winkelpositionen der Lichtstrahlen 6 werden Geometrien und Positionen von Objekten im Raumbereich 7 erfasst.

Erfindungsgemäß wird mit dem Sicherheitssensor 2 ein definierter, konfigurierbarer Teilbereich 8 innerhalb des Raumbereichs 7 überwacht. In diesem Raumbereich 7 befindet sich ein Roboter 9, der von einer nicht dargestellten Sicherheitssteuerung gesteuert wird. Der Roboter 9 kann innerhalb des Teilbereichs 8 bewegt werden und Arbeitsbewegungen ausführen, die Gefährdungen für Personen darstellen können.

Wie die Figuren 1 und 2 zeigen, ist ein Transportfahrzeug 10 in Form eines Gabelstaplers vorgesehen, mit dem Transportgüter 11 in den Teilbereich 8 eingebracht werden können, die der Roboter 9 zur Durchführung von Arbeitsprozessen benötigt.

Wie Figur 2 zeigt, ist der Teilbereich 8 an drei Seiten von einem Zaun 12 begrenzt. Damit kann ein Zugang zum Teilbereich 8 nur über die verbleibende offene Seite erfolgen.

Erfindungsgemäß wird in der Steuer- und Auswerteeinheit 5 des Sicherheitssensors 2 eine Objektklassifizierung durchgeführt, d.h. mit dem Sicherheitssensor 2 erfasste Objekte werden unterschiedlichen Objektklassen zugeordnet. Zur Durchführung der Objektklassifikation wird ein in der Steuer- und Auswerteeinheit 5 vorhandenes neuronales Netz eingesetzt.

Die Objektklassifikation erfolgt dabei derart, dass mit dem Sicherheitssensor 2 erfasste Personen als nicht zulässige Objekte klassifiziert werden, während Transportgüter 11 und Transportfahrzeuge 10 als zulässige Objekte klassifiziert werden.

Bei einem Transportfahrzeug 10 in Form eines Gabelstaplers kann ein Fahrer im Fahrerhaus des Gabelstaplers sitzen. Der Fahrer wird, da er geschützt in dem Fahrerhaus sitzt, nicht als nicht zulässiges Objekt gewertet. Erst wenn der Fahrer das Fahrerhaus verlässt, wird er vom Sicherheitssensor 2 separat als Person erkannt und damit als nicht zulässiges Objekt klassifiziert.

Erfindungsgemäß wird mittels der Überwachungseinrichtung 1 zulässigen Objekten, d.h. Transportgütern 11 und Transportfahrzeugen 10 ungehindert ein Zugang zum Teilbereich 8 gewährt, d.h. auch wenn mit dem Sicherheitssensor 2 ein zulässiges Objekt im Teilbereich 8 registriert wird, werden keine Sicherheitsmaßnahmen ausgelöst und der Roboter 9 kann weitere Arbeitsvorgänge durchführen.

Wird dagegen mit dem Sicherheitssensor 2 ein in den Teilbereich 8 eindringendes nicht zulässiges Objekt wie z.B. eine Person registriert, wird in der Steuer- und Auswerteeinheit 5 ein Ausgangssignal generiert.

Das Ausgangssignal wird an einem Ausgang des Sicherheitssensors 2 oder mittels eines Bussystems an eine externe Einheit ausgegeben.

Vorteilhaft ist der Ausgang ein sicherer Ausgang und das Bussystem ist ein sicheres Bussystem.

Mit dem Ausgangssignal kann beispielsweise eine Alarmmeldung generiert werden, die Personen im Teilbereich 8 auf die Gefahrensituation hinweist.

Besonders vorteilhaft wird abhängig vom Ausgangssignal eine Sicherheitsfunktion ausgelöst, beispielsweise derart, dass der Roboter 9 stillgesetzt wird. Dies wird dadurch erreicht, dass mit dem Ausgangssignal die Sicherheitssteuerung des Roboters 9 entsprechend angesteuert wird.

Vorteilhaft werden zur Durchführung einer Obj ektklassifikation mit dem Sicherheitssensor 2 erfasste Objekte durch zusammenhängende zwei- oder dreidimensionale Körper modelliert.

Dabei wird zur Durchführung einer Objektklassifikation das Bewegungsprofil der Körper analysiert.

Eine Person ist als nicht zulässiges Objekt dadurch klassifiziert, dass deren Körper ein ungleichförmiges Bewegungsprofil erzeugen.

Ein Objekt in Form eines Transportfahrzeugs 10 oder Transportguts 11 ist als zulässiges Objekt dadurch klassifiziert, dass deren Körper ein gleichförmiges Bewegungsprofil erzeugen.

Weiterhin kann ein mit dem Sicherheitssensor 2 erfasstes Objekt abhängig davon einer Objektklasse zugeordnet sein, ob eine zwei- oder dreidimensionale Sollstruktur in die Kontur des Objekts einpassbar ist oder nicht.

Ein Transportfahrzeug gilt beispielsweise dann als erkannt, wenn ein Rechteck oder Quadrat vorgegebener Größe (z. B. 2m x 2m) nicht überall in der dreidimensionalen Objektstruktur eingepasst werden kann.

Ebenso kann ein Transportfahrzeug 10 dadurch erkannt werden, dass in die erfasste Objektstruktur ein Würfel mit einer durch einen Schwellwert vorgegeben Kantenlänge einpassbar ist. Dabei wird die Erkenntnis ausgenutzt, dass ein Transportfahrzeug 10 wie ein Gabelstapler eine eher quaderförmige Struktur aufweist, während Personen eher rohrförmige Konturen aufweisen.

Diese Erkenntnis zugrunde legend ist es auch möglich, für ein mit dem Sicherheitssensor 2 erfasstes Objekt eine Umhüllende ihrer Objektkontur zu bilden, wobei eine Zuordnung des Objekts zu einer Objektklasse durch Vergleich der Umhüllenden mit Referenzgeometrien erfolgt.

Alternativ oder zusätzlich kann auch eine Objektklassifikation durch Auswertung der Farbe, Geschwindigkeit, Größe und/oder Bewegungsrichtung eines Objekts erfolgen.

### Bezugszeichenliste

- (1): Überwachungseinrichtung
- (2): Sicherheitssensor
- (3): Boden
- (4): Sensorkomponente
- (5): Steuer- und Auswerteeinheit
- (6): Lichtstrahl
- (7): Raumbereich
- (8): Teilbereich
- (9): Roboter
- (10): Transportfahrzeug
- (11): Transportgut
- (12): Zaun

- (W): Winkelbereich

## Patentansprüche

1. Überwachungseinrichtung (1) mit einem Sicherheitssensor (2), mittels dessen ein dreidimensionaler Raumbereich (7) überwacht wird, **dadurch gekennzeichnet, dass** innerhalb des Raumbereichs (7) ein definierter Teilbereich (8) vorhanden ist, dass im Raumbereich (7) vorhandene Objekte mittels des Sicherheitssensors (2) klassifizierbar sind, wobei nur als zulässig klassifizierte Objekte Zugang zum Teilbereich (8) erhalten.

2. Überwachungseinrichtung (1) nach Anspruch 1, **dadurch gekennzeichnet, dass** der Sicherheitssensor (2) ein optischer Sensor, ein Radarsensor oder ein Ultraschallsensor ist.

3. Überwachungseinrichtung (1) nach einem der Ansprüche 1 oder 2, **dadurch gekennzeichnet, dass** der Sicherheitssensor (2) ein Distanzsensor ist, wobei die Distanzmessungen nach einem Impuls-Laufzeit-Verfahren oder nach einem Phasenmessverfahren durchführbar sind.

4. Überwachungseinrichtung (1) nach Anspruch 3, **dadurch gekennzeichnet, dass** der Sicherheitssensor (2) ein kamerabasierter Sensor oder ein LIDAR-Sensor ist.

5. Überwachungseinrichtung (1) nach einem der Ansprüche 1 bis 4, **dadurch gekennzeichnet, dass** der Sicherheitssensor (2) eine redundante Steuer- und Auswerteeinheit (5) aufweist, in der die Objektklassifikation erfolgt.

6. Überwachungseinrichtung (1) nach Anspruch 5, **dadurch gekennzeichnet, dass** die Steuer- und Auswerteeinheit (5) zur Durchführung der Objektklassifikation ein neuronales Netz aufweist, und/oder dass in der Steuer- und Auswerteeinheit (5) eine Ausgabegröße generiert wird, die angibt, ob ein Objekt ein zulässiges Objekt oder ein nicht zulässiges Objekt ist.

7. Überwachungseinrichtung (1) nach einem der Ansprüche 5 oder 6, **dadurch gekennzeichnet, dass** bei Erfassung eines nicht zulässigen Objekts innerhalb des Teilbereichs (8) die Steuer- und Auswerteeinheit (5) ein Ausgangssignal generiert, wobei das Ausgangssignal an einem Ausgang des Sicherheitssensors (2) oder mittels eines Bussystems an eine externe Einheit ausgegeben wird.

8. Überwachungseinrichtung (1) nach Anspruch 7, **dadurch gekennzeichnet, dass** der Ausgang ein sicherer Ausgang ist und dass das Bussystem ein sicheres Bussystem ist.

9. Überwachungseinrichtung (1) nach einem der Ansprüche 7 oder 8, **dadurch gekennzeichnet, dass** abhängig vom Ausgangssignal eine Sicherheitsfunktion ausgelöst wird.

10. Überwachungseinrichtung (1) nach einem der Ansprüche 5 bis 9, **dadurch gekennzeichnet, dass** der Teilbereich (8) in der Steuer- und Auswerteeinheit (5) abgespeichert ist.

11. Überwachungseinrichtung (1) nach Anspruch 10, **dadurch gekennzeichnet, dass** der Teilbereich (8) konfigurierbar ist.

12. Überwachungseinrichtung (1) nach Anspruch 11, **dadurch gekennzeichnet, dass** in der Steuer- und Auswerteeinheit (5) Objekte dadurch erfasst sind, dass aus einer Gesamtheit von Messwerten des Sicherheitssensors (2) zu Objekten gehörende Messwerte extrahiert werden.

13. Überwachungseinrichtung (1) nach einem der Ansprüche 1 bis 12, **dadurch gekennzeichnet, dass** zur Durchführung einer Objektklassifikation mit dem Sicherheitssensor (2) erfasste Objekte durch zusammenhängende zwei- oder dreidimensionale Körper modelliert sind, und/oder dass zur Durchführung einer Objektklassifikation das Bewegungsprofil der Körper analysiert wird.

14. Überwachungseinrichtung (1) nach Anspruch 13, **dadurch gekennzeichnet, dass** eine Person als nicht zulässiges Objekt dadurch klassifiziert ist, dass deren Körper ein ungleichförmiges Bewegungsprofil erzeugen, und/oder dass ein Objekt in Form eines Transportfahrzeugs (10) oder Transportguts (11) als zulässiges Objekt dadurch klassifiziert ist, dass deren Körper ein gleichförmiges Bewegungsprofil erzeugen.

15. Überwachungseinrichtung (1) nach einem der Ansprüche 1 bis 14, **dadurch gekennzeichnet, dass** ein mit dem Sicherheitssensor (2) erfasstes Objekt abhängig davon einer Objektklasse zugeordnet ist, ob eine zwei- oder dreidimensionale Sollstruktur in die Kontur des Objekts einpassbar ist oder nicht.

16. Überwachungseinrichtung (1) nach Anspruch 15, **dadurch gekennzeichnet, dass** die zweidimensionale Sollstruktur ein Rechteck ist, und dass die dreidimensionale Sollstruktur ein Quader ist.

17. Überwachungseinrichtung (1) nach einem der Ansprüche 1 bis 21, **dadurch gekennzeichnet, dass** für ein mit dem Sicherheitssensor (2) erfasstes Obj ekt eine Umhüllende aus deren Objektkontur gebildet wird, und dass eine Zuordnung des Objekts zu einer Objektklasse durch Vergleich der Umhüllenden mit Referenzgeometrien erfolgt, und/oder dass eine Objektklassifikation durch Auswertung der Farbe, Geschwindigkeit, Größe und/oder Bewegungsrichtung eines Objekts erfolgt.
